# EUROPEAN PATENT SPECIFICATION

(11) **EP 1 754 685 B1**
(45) Date of publication and mention of the grant of the patent: **06.01.2010**
(21) Application number: 06016002.5
(22) Date of filing: 01.08.2006
(51) Int. Cl.: C01B 33/145, C01B 33/159, C01B 33/148

(54) **Organosol of silica and process for producing the same**
Kieselsäure Organosol und Verfahren zu dessen Herstellung
Organosol de silice et son procédé de préparation

(30) Priority: 02.08.2005 JP 2005223597
(43) Date of publication of application: 21.02.2007
(73) Proprietor: Nissan Chemical Industries, Ltd., Chiyoda-ku, Tokyo 101-0054 (JP)
(72) Inventor: Suemura, Naohiko, c/o Nissan Chem. Ind. , Ltd., Sodegaura-shi, Chiba 299-0266 (JP); Yoshitake, Keiko, c/o Nissan Chem. Ind. , Ltd., Sodegaura-shi, Chiba 299-0266 (JP)
(74) Representative: Hoffmann, Klaus

(56) References cited:
- EP-A1- 1 008 555
- EP-A2- 0 335 195
- WO-A-96/22256
- GB-A- 1 039 940
- JP-A- 4 050 112
- US-A- 2 375 738
- US-A- 3 328 339
- US-A1- 2004 147 660
- RALPH K. ILER: "Coagulation of Colloidal Silica by Calcium Ions, Mechanism and Effect of Particle Size" JOURNAL OF COLLOID AND INTERFACE SCIENCE, vol. 53, no. 3, 4 September 1975 (1975-09-04), pages 476-488, XP002405020

## Description

### 1. Field of the Art

The present invention relates to an organosol of silica, and a process for producing the same.

### 2. Description of the Related Art

An organosol of silica can be used as hard coat films formed on the surface of resin molded forms such as lenses, bottles, films or plates, or micro-fillers for thin films, resin internal additives, and the like. As processes for producing an organosol of silica , for example the following processes are disclosed:
(1) A process for producing a silica sol dispersed in methanol, comprising removing metal ions in an aqueous silica sol by an ion exchange method, then mixing with methanol, and thereafter concentrating and dehydrating by an ultrafiltration method (see, JP-A-02-167813 (1990);
(2) A process for a producing hydrophobic organosol of silica, comprising neutralizing a dispersion containing a hydrophilic colloidal silica, a silylating agent, a hydrophobic organic solvent, water and an alcohol, heating, aging and substituting the solvent by a distillation method(see, JP-A-11-043319 (1999); and
(3) A process for producing silica sol containing organic solvent as dispersion medium, comprising mixing a silica sol containing water as dispersion medium with an organic solvent, and dehydrating with an ultrafiltration method(see, JP-A-59-008614 (1984).

When organosols of silica are used in mixture with synthetic resins such as polyesters, acrylic resins, polycarbonates, and the like, they often cause change of properties or decomposition, etc. of the resins with time, and color change or cracks often occurs, due to the action of the solid acidity of the surface of the colloidal silica particles. In addition, when colloidal silica particles are dispersed in a solvent such as a ketone, an ester, an amide or the like, decomposition or coloring occurs in the solvents being dispersion medium of the sol, due to the catalytic action of the solid acidity of silica. Consequently, the prior silica sols dispersed in organic solvent cause problems in several purposes that they are used.

EP 1 008 555 A1 discloses sols and organosols suitable for coating glass and resin substrates. These sols contain silica-magnesium fluoride hydrate composite particles with a SiO₂ : MgF₂ weight ratio ranging from 0.01 to 5, suitable for coating glass and resin substrates.

Subject matter of R. K. Iler, J. Coll. Int. Sci., 53, 476 (1975) are aqueous silica sols with surface bound calcium ions. The effect of these ions regarding silica agglomeration is discussed.

US 3 328 339 discloses silica slurries comprising silica in a rather broad particle size distribution ranging from 200 nm to 1 mm, that could comprise alkali earth metal salts in an amount of 0.05 to 25% of the weight of the silica. The silica is used for reinforcement of plastics.

US 2 375 738 discloses the preparation of silica sols and organosols.

GB 1 039 940 discloses the preparation of silicate particles starting from organosols of monomeric silicic acid, wherein alkali earth metal salts are applied in stoichiometric ratio.

### SUMMARY OF THE INVENTION

Therefore, an object of the present invention is to provide an organosol of silica that does not cause change of properties or decomposition, etc. of resins with time, and decomposition or coloring does not occur in the organic solvent being dispersion medium.

That is, a first mode of the present invention is an organosol of silica, wherein alkaline earth metal ions are bonded on surface of colloidal silica particles in a ratio of 0.001 to 0.2 alkaline earth metal ions per 1 nm² of the surface of the silica particles.

The present invention includes the following preferable embodiment:
the organosol of silica
   - wherein the alkaline earth metal ion is calcium ion or magnesium ion.

A second mode of the present invention is a process for producing an organosol of silica, comprising the steps:
adding an alkaline earth metal compound to an aqueous silica sol to obtain a surface-treated silica sol wherein alkaline earth metal ions are bonded on surface of colloidal silica particles, and
then substituting the organic solvent for water that is dispersion medium of the obtained surface-treated silica sol, or a process for producing an organosol of silica, wherein alkaline earth metal ions are bonded on surface of a colloidal silica particle, comprising adding an alkaline earth metal compound in an organosol of silica

The present invention includes the following preferable embodiments:
the process for producing the organosol of silica
   - wherein the aqueous silica sol is an acidic aqueous silica sol;
   - wherein the alkaline earth metal compound is added in an amount of alkaline earth metal ion of 0.001 to 0.2 per 1 nm² of the surface of the colloidal silica particle;
   - wherein the alkaline earth metal compound is an alkaline earth metal hydroxide;
   - wherein the alkaline earth metal compound is calcium hydroxide or magnesium hydroxide; and
   - wherein the alkaline earth metal compound added to the organosol of silica is
soluble in the organic solvent used.

The organosol of silica of the present invention has a low solid acidity of silica. Therefore, in case where it is used in a mixture with a resin and the like, it can inhibit change of properties or decomposition, etc. of the resin, compared with silica sols that no alkaline earth metal is bonded to the surface of the particles. In addition, when the silica sol of the present invention is dispersed in several organic solvents, it prevents decomposition of the solvents. Further, the organosol of silica of the present invention affords an improvement in several purposes.

### DESCRIPTION OF THE PREFERRED EMBODIMENTS

Hereinafter, the present invention of organosol is described in detail.

The organosol of silica of the present invention is a stable dispersion of colloidal silica particles on the surface of which an alkaline earth metal ion is bonded.

The aqueous silica sol that is a starting material in the present invention is a stable dispersion of colloidal silica particles having a specific surface area of 5.5 to 550 m²/g in water, and it can be produced according to a known method by using water glass as a raw material. And, the particle form may be any one that is known in this technical field.

If free alkaline metal ions are present in an aqueous silica sol, sols obtained by adding an alkaline earth metal compound or sols obtained by carrying out solvent exchange is lowered in the stability of the sols. Therefore, it is preferable to use an acidic aqueous silica sol that alkaline metal ions are previously removed. For example, it is preferable to use an acidic aqueous silica sol obtained by removing free cations from an alkaline aqueous silica sol with a method such as ion exchange or the like, or an acidic aqueous silica sol obtained by removing cations and the majority or total amount of anions. Further, an ion-exchanged silica sol may be subjected to pH adjustment by adding a small amount of acid such as sulfuric acid or carboxylic acid, etc.

SiO₂ concentration of the acidic aqueous silica sol is preferably 5 to 55 mass%. In addition, the specific surface area of the colloidal silica particles is 5.5 to 550 m²/g, more preferably 27 to 550 m²/g, and most preferably 90 to 550 m²/g. The particle diameter (specific surface area diameter) of the colloidal silica particles contained in the aqueous silica sol is calculated from the specific surface area S (m²/g) decided on the basis of nitrogen adsorption method (BET method) according to the following equation: D (nm) = 2720/S.

Therefore, the particle diameter of the acidic aqueous silica sol is 5 to 500 nm, more preferably 5 to 100 nm, and most preferably 5 to 30 nm. The sols having a particle diameter of 5 nm or less are difficult to concentrate to a high level, on the other hand the sols having a particle diameter of 500 nm or more have a high settling property and a low shelf stability.

The alkaline earth metal compounds added in the aqueous silica sol that can be used in the present invention include oxides or hydroxides, salts (inorganic acid salts such as nitrates, sulfates, phosphates, hydrochlorides, carbonates or the like, organic acid salts such as carboxylates or the like) of alkaline earth metals. The kind of the alkaline earth metals includes beryllium (Be), magnesium (Mg), calcium (Ca), strontium (Sr), barium (Ba), and radium (Ra). Among them, magnesium and calcium are preferable due to availability of the compounds and easiness in handling. Particularly, magnesium hydroxide and calcium hydroxide that are hydroxide salts are preferably used in the present invention.

In addition, the organosol of silica in the present invention can also be obtained adding an alkaline earth metal compound to a organosol of silica as a starting material. The alkaline earth metal compounds added in the organosol of silica as a starting material that can be used in the present invention include salts (inorganic acid salts such as nitrates, sulfates, phosphates, hydrochlorides, carbonates or the like, organic acid salts such as carboxylates or the like) or alkoxides of alkaline earth metals, which are soluble in the organic solvent used. The concrete examples of the alkaline earth metal alkoxides include calcium dimethoxide, calcium diisopropoxide, calcium dimethoxy ethoxide, magnesium diethoxide, magnesium dimethoxy ethoxide, and the like. In this case, the organosol of silica as a starting material may be commercially available products, and include for example MT-ST (silica sol dispersed in methanol, manufactured by Nissan Chemical Industries, Ltd.) and MEK- ST (silica sol dispersed in methyl ethyl ketone, manufactured by Nissan Chemical Industries, Ltd.).

The amount of alkaline earth metal ion bonded is preferably 0.001 to 0.2 per 1 nm² of the colloidal silica particles. In case where the amount is less than 0.001/nm², it cannot be expected to exert a sufficient inhibition effect of solid acidity. On the other hand, in case where the amount is more than 0.2/nm², the stability of the organosol of silica is lowered. The amount of alkaline earth metal ion bonded per unit area (nm²) of the colloidal silica particles is calculated from the particle diameter (nm) of the colloidal silica particles measured on the basis of BET method and the added amount of the alkaline earth metal compound.

In the organosol of silica, the organic solvent that can be used in the present invention includes all organic solvents such as alcohols, ketones, esters, hydrocarbons and the like.
The concrete examples of alcohols include methanol, ethanol, 1-propanol, 2-propanol, 1-butanol, isobutyl alcohol, 2-butanol, 1,2-ethanediol, glycerol, 1,2-propandiol, triethylene glycol, polyetylene glycol, Benzyl alcohol, 1,5-pentanediol, diacetone alcohol, and the like.
The concrete examples of ethers include diethyl ether, dibutyl ether, tetrahydrofuran, dioxane, and the like.
The concrete examples of esters include ethyl formate, methyl acetate, ethyl acetate, propyl acatate, butyl acetate, 2-ethoxyetyl acetate, 2-butoxyethyl acetate, hydroxyethyl methacrylate, hydroxyethyl acrylate, methyl methacrylate, hexanediol diacrylate, trimethylolpropane tryacrylate, ethoxylated trimethylolpropane tryacrylate, tetrahydrofurfuryl acrylate, isobonyl acrylate, tripropyleneglycol diacrylate, pentaerythritol triacrylate, glycidyl methacrylate, and the like.
The concrete examples of ketones include acetone, methyl ethyl ketone, 2-pentanone, 3-pentanone, methyl isobutyl ketone, 2-heptanone, cyclohexanone, and the like.
The concrete examples of hydrocarbons include n-hexane, cyclohexane, benzene, toluene, xylene, solvent naphtha, styrene, dichloromethane, trichloroethylene, and the like.
The concrete examples of epoxides include allyl glycidil ether, 2-ethylhexyl glycidil ether, phenyl glycidil ether, p-tert-butylphenyl glycidil ether, ethylene Glycol diglycidil ether, diethylene glycol diglycidil ether, propylene glycol diglycidil ether, polypropylene glycol diglycidil ether, 1,6-hexanediol diglycidil ether, pentaerythritol polyglycidil ether, 3,4-epoxycyclohexylmethyl-3,4-epoxycyclohaxane carboxylate, and the like.
The concrete examples of another organic solvent include acetonitrile, acetoamide, N,N-dimetylformamide, N,N-dimethylacetamide, N-methylpyrroridone, aAcrylic acid, methacrylic acid, and the like.

Hereinafter, the process for producing the organosol of silica according to the present invention is described in detail.

The present invention includes a process for producing an organosol of silica , comprising the steps: adding in an acidic aqueous silica sol having a particle diameter of 5 to 500 nm, an alkaline earth metal compound in an amount of alkaline earth metal ion of 0.001 to 0.2 per 1 nm², preferably 0.002 to 0.1 per 1 nm² of the colloidal silica particle, and then substituting an organic solvent.

At first, the step for adding an alkaline earth metal compound in an acidic aqueous silica sol is carried out by adding an alkaline earth metal compound in a state of powder, aqueous solution or slurry with stirring of an acidic aqueous silica sol at room temperature or under heating. After the addition, stirring is fully carried out and thereby making the alkaline earth metal compound dissolved.

In case where the acidic aqueous silica sol contains a large amount of anion components or in case where an alkaline earth metal salt is used as an alkaline earth metal compound, the bonding of the alkaline earth metal ion on the surface of silica is inhibited by the anion components contained therein. Therefore, after the addition, it is required to remove partially or completely the anion components. The method therefor includes ion exchange or ultrafiltration, and the like. The decrease of the anion components leads to the bonding of the alkaline earth metal ion on the surface of the colloidal silica particles.

The following step for substituting organic solvent may be carried out by any known methods, for example, by distillation substituting method, ultrafiltration, or the like. As to substituting a hydrophilic organic solvent, the organosol of silica according to the present invention can be obtained by directly subjecting the alkaline earth metal bonded aqueous silica sol to a hydrophilic solvent substitution.

In addition, as to substituting a hydrophobic organic solvent, it is known a process in which the surface of silica is subjected to a hydrophobic treatment, and then to substituting a desired solvent. As methods for the hydrophobic treatment, the followings are known: a process in which silanol group on the surface of silica particles is esterified by heating a sol in the presence of excess alcohol (JP-A-57-196717 (1982)), and a process in which the surface of silica is treated with a silylating agent or a silane coupling agent (JP-A-58-145614 (1983), JP-A-03-187913 (1991), JP-A-11-43319 (1999)).
In addition, the process for producing the organosol of silica of the present invention comprising adding an alkaline earth metal compound to a organosol of silica may be used a organosol of silica as a raw material, comprising hydrophobic treated or not treated colloidal silica particles, where the organosol of silica, comprising hydrophobic treated colloidal silica particles is desirable.
According to these processes, the organosol of silica of the present invention can be obtained.

### EXAMPLES

### Example 1

In a polyethylene container having an inner volume of 1 L, 754 g of an acidic aqueous silica sol having a small particle diameter (BET particle diameter: 7 nm, SiO₂ concentration: 15 mass%, pH 2.7) was placed, 0.045 g of calcium hydroxide was added with stirring by a disper at a rotational speed of 1000 rpm, and dissolved by stirring at room temperature for 30 minutes to obtain a calcium-bonded aqueous silica sol (pH 3.1). In a glass reactor having an inner volume of 1 L provided with a stirrer, a condenser, a thermometer and two inlets, 732 g of this silica sol was placed, boiling of the silica sol was maintained in the reactor, and methanol vapor generated in a boiler was continuously bubbled into the silica sol in the reactor while a level of the liquid was slightly raised. When the volume of distillate reached 10 L, solvent substitution was completed to obtain 730 g of a calcium-bonded silica sol dispersed in methanol (SiO₂ concentration: 15.6 mass%, viscosity: 1.7 mPa·s, water content: 1.3 mass%, pH of the sol diluted with the same mass of pure water: 3.6, Ca ion per 1 nm² of the surface of colloidal silica particles: 0.008). A part of the sol was sealed in a glass container, and the viscosity thereof was 1.7 mPa•s after being kept in a thermostat at 50°C for 1 month. Thus, the sol was stable.

### Example 2

In a glass reactor having an inner volume of 1 L provided with a stirrer, 674 g of the calcium-bonded silica sol dispersed in methanol prepared in Example 1 was placed, 16.9 g of hexamethyl disiloxane was added, and the temperature of the liquid was maintained at 55°C for 2 hours. The sol was transferred into an eggplant-shaped flask having an inner volume of 1 L, 1230 g of methyl ethyl ketone was added therein while the solvent was distillated off with a rotary evaporator to obtain 512 g of a calcium-bonded silica sol dispersed in methyl ethyl ketone (SiO₂ concentration: 20.5 mass%, viscosity: 1.6 mPa•s, water content: 0.1 mass%). A part of the sol was sealed in a glass container, and the viscosity thereof was 1.7 mPa·s after being kept in a thermostat at 50°C for 1 month. Thus, the sol was stable.

### Example 3

In a polyethylene container having an inner volume of 2 L, 1223 g of an acidic aqueous silica sol (Snowtex (trademark)-OS, BET particle diameter: 10 nm, SiO₂ concentration: 20 mass%, pH 2.8, manufactured by Nissan Chemical Industries, Ltd.) was placed, 0.099 g of calcium hydroxide was added with stirring by a disper at a rotational speed of 1000 rpm, and dissolved by stirring at room temperature for 30 minutes to obtain a calcium-bonded aqueous silica sol (pH 3.5). In a glass reactor having an inner volume of 2 L provided with a stirrer, a condenser, a thermometer and two inlets, 1116 g of this silica sol was placed, boiling of the silica sol was maintained in the reactor, and methanol vapor generated in a boiler was continuously bubbled into the silica sol in the reactor while a level of the liquid was slightly raised. When the volume of distillate reached 11 L, solvent substitution was completed to obtain 1105 g of a calcium-bonded silica sol dispersed in methanol (SiO₂ concentration: 20.5 mass%, viscosity: 1.7 mPa·s, water content: 1.4mass%, pH of the sol diluted with the same mass of pure water: 3.8, Ca ion per 1 nm² of the surface of colloidal silica particles: 0.012). A part of the sol was sealed in a glass container, and the viscosity thereof was 1.7 mPa·s after being kept in a thermostat at 50°C for 1 month. Thus, the sol was stable.

### Example 4

In a glass reactor having an inner volume of 1 L provided with a stirrer, 626 g of the calcium-bonded silica sol dispersed in methanol prepared in Example 3 was placed, 12.5 g of hexamethyl disiloxane was added, and the temperature of the liquid was maintained at 55°C for 2 hours. The sol was transferred into an eggplant-shaped flask having an inner volume of 1 L, 1300 g of methyl ethyl ketone was added therein while the solvent was distillated off with a rotary evaporator to obtain 630 g of a calcium-bonded silica sol dispersed in methyl ethyl ketone (SiO₂ concentration: 20.6 mass%, viscosity: 1.8 mPa·s, water content: 0.1 mass%). A part of the sol was sealed in a glass container, and the viscosity thereof was 1.8 mPa·s after being kept in a thermostat at 50°C for 1 month. Thus, the sol was stable.

### Example 5

In a polyethylene container having an inner volume of 3 L, 2346 g of an acidic aqueous silica sol (Snowtex (trademark)-OS, BET particle diameter: 10 nm, SiO₂ concentration: 20 mass%, pH 2.8, manufactured by Nissan Chemical Industries, Ltd.) was placed, 0.105 g of calcium hydroxide was added with stirring by a disper at a rotational speed of 1000 rpm, and dissolved by stirring at room temperature for 60 minutes to obtain a calcium-bonded aqueous silica sol (pH 3.2). In a glass reactor having an inner volume of 2 L provided with a stirrer, a condenser, a thermometer and two inlets, 1572 g of this silica sol was placed, boiling of the silica sol was maintained in the reactor, and methanol vapor generated in a boiler was continuously bubbled into the silica sol in the reactor while a level of the liquid was slightly raised. When the volume of distillate reached 13 L, solvent substitution was completed to obtain 1550 g of a calcium-bonded silica sol dispersed in methanol (SiO₂ concentration: 20.5 mass%, viscosity: 1.7 mPa·s, water content: 1.3 mass%, pH of the sol diluted with the same mass of pure water: 3.7, Ca ion per 1 nm² of the surface of colloidal silica particles: 0.008). A part of the sol was sealed in a glass container, and the viscosity thereof was 1.7 mPa·s after being kept in a thermostat at 50°C for 1 month. Thus, the sol was stable.

### Example 6

In a glass reactor having an inner volume of 1 L provided with a stirrer, 717 g of the calcium-bonded silica sol dispersed in methanol prepared in Example 5 was placed, 20.5 g of hexamethyl disiloxane was added, and the temperature of the liquid was maintained at 55°C for 2 hours. The sol was transferred into an eggplant-shaped flask having an inner volume of 1 L, 1409 g of methyl ethyl ketone was added therein while the solvent was distillated off with a rotary evaporator to obtain 710 g of a calcium-bonded silica sol dispersed in methyl ethyl ketone (SiO₂ concentration: 20.4 mass%, viscosity: 1.4 mPa·s, water content: 0.1 mass%). A part of the sol was sealed in a glass container, and the viscosity thereof was 1.5 mPa·s after being kept in a thermostat at 50°C for 1 month. Thus, the sol was stable.

### Example 7

Procedures were carried out in a similar manner as those in Example 5 except that calcium hydroxide was added in an amount of 0.211 g. Consequently, it was obtained a calcium-bonded silica sol dispersed in methanol (SiO₂ concentration: 20.3 mass%, viscosity: 1.6 mPa·s, water content: 1.5 mass%, pH of the sol diluted with the same mass of pure water: 4.6, Ca ion per 1 nm² of the surface of colloidal silica particles: 0.016). A part of the sol was sealed in a glass container, and the viscosity thereof was 1.7 mPa·s after being kept in a thermostat at 50°C for 1 month. Thus, the sol was stable.

### Example 8

Procedures were carried out in a similar manner as those in Example 5 except that 0.156 g of magnesium hydroxide was added in place of calcium hydroxide. Consequently, it was obtained a magnesium-bonded silica sol dispersed in methanol (SiO₂ concentration: 20.5 mass%, viscosity: 1.6 mPa·s, water content: 1.6 mass%, pH of the sol diluted with the same mass of pure water: 4.6, Ca ion per 1 nm² of the surface of colloidal silica particles: 0.015). A part of the sol was sealed in a glass container, and the viscosity thereof was 1.7 mPa·s after being kept in a thermostat at 50°C for 1 month. Thus, the sol was stable.

### Example 9

2346 g of an acidic aqueous silica sol (Snowtex (trademark)-O, BET particle diameter: 12 nm, SiO₂ concentration: 20 mass%, pH 2.8, manufactured by Nissan Chemical Industries, Ltd.) was passed through a column filled with 200ml of a hydrogen type strong acidic cationic exchange resin Amberlite 120B with 15 space velocity via 1 hour at abut 25°C. The sol obtained by the process was placed in a polyethylene container having an inner volume of 3 L, a slurry of 0.432 g of calcium hydroxide dispersed in 10g of pure water was added with stirring by a disper at a rotational speed of 1000 rpm, and dissolved by stirring at room temperature for 1 hour to obtain a calcium-bonded aqueous silica sol (pH 4.6). In a glass reactor having an inner volume of 2 L provided with a stirrer, a condenser, a thermometer and two inlets, 1572 g of this silica sol was placed, boiling of the silica sol was maintained in the reactor, and methanol vapor generated in a boiler was continuously bubbled into the silica sol in the reactor while a level of the liquid was slightly raised. When the volume of distillate reached 13 L, solvent substitution was completed to obtain 1550 g of a calcium-bonded silica sol dispersed in methanol (SiO₂ concentration: 20.5 mass%, viscosity: 1.7 mPa·s, water content: 1.0 mass%, pH of the sol diluted with the same mass of pure water: 5.1, Ca ion per 1 nm² of the surface of colloidal silica particles: 0.033). A part of the sol was sealed in a glass container, and the viscosity thereof was 1.7 mPa·s after being kept in a thermostat at 50°C for 1 month. Thus, the sol was stable.

### Example 10

In a glass reactor having an inner volume of 1 L provided with a stirrer, 800 g of a silica sol dispersed in methanol (MT-ST, BET particle diameter: 12 nm, SiO₂ concentration: 30 mass% manufactured by Nissan Chemical Industries, Ltd.) was placed, 8.0 g of hexamethyl disiloxane was added, and the temperature of the liquid was maintained at 55°C for 2 hours. In the resulting sol, 0.36 g of calcium methacrylate hydrate (manufactured by Tokyo Kasei Kogyo Co., Ltd.) was added and dissolved by stirring for 30 minutes to obtain 808 g of a calcium-bonded silica sol dispersed in methanol (SiO₂ concentration: 30 mass%, viscosity: 1.8 mPa·s, water content: 1.5 mass%, Ca ion per 1 nm² of the surface of colloidal silica particles: 0.019). A part of the sol was sealed in a glass container, and the viscosity thereof was 1.8 mPa·s after being kept in a thermostat at 50°C for 1 month. Thus, the sol was stable.

### Example 11

**1102** g of an acidic aqueous silica sol (Snowtex (trademark)-OL, BET particle diameter: 47 nm, SiO₂ concentration: 20 mass%, pH 3.2, manufactured by Nissan Chemical Industries, Ltd.) was passed through a column filled with 200ml of a hydrogen type strong acidic cationic exchange resin Amberlite 120B with 15 space velocity via 1 hour at about 25°C. The sol obtained by the above process was placed in a polyethylene container having an inner volume of 2 L, a solution of 0.237 g of calcium hydroxide dissolved in 200g of pure water was added with stirring by a disper at a rotational speed of 1000 rpm, and dissolved by stirring at room temperature for 1 hour to obtain a calcium-bonded aqueous silica sol (pH 7.4). In an eggplant-shaped flask having an inner volume of 1 L, 212.7 g of this silica sol was placed with 176.0g of ethylene glycol, concentrating with evaporator to obtain 180.4 g of a calcium-bonded silica sol dispersed in ethylene glycol (SiO₂ concentration: 20.6 mass%, viscosity: 38.1 mPa·s, water content: 0.1 mass%, pH of the sol diluted with the same mass of pure water: 7.9, Ca ion per 1 nm² of the surface of colloidal silica particles: 0.151). A part of the sol was sealed in a glass container, and the viscosity thereof was 38.2 mPa·s after being kept in a thermostat at 50°C for 1 month. Thus, the sol was stable.

### Example 12

Procedures were carried out in a similar manner as those in Examples 11 except that a solution of 0.126 g of calcium hydroxide disolved in 200g of pure water was added to the acidic aqueous sol, to obtain 180.4 g of a calcium-bonded silica sol dispersed in ethylene glycol (SiO₂ concentration: 20.5 mass%, viscosity: 37.1 mPa·s, water content: 0.1 mass%, pH of the sol diluted with the same mass of pure water: 6.3, Ca ion per 1 nm² of the surface of colloidal silica particles: 0.080). A part of the sol was sealed in a glass container, and the viscosity thereof was 37.3 mPa·s after being kept in a thermostat at 50°C for 1 month. Thus, the sol was stable.

### Example 13

Procedures were carried out in a similar manner as those in Examples 11 except that a solution of 0.040 g of calcium hydroxide dissolved in 200g of pure water was added to the acidic aqueous sol, to obtain 180.4 g of a calcium-bonded silica sol dispersed in ethylene glycol (SiO₂ concentration: 20.5 mass%, viscosity: 36.5 mPa·s, water content: 0.1 mass%, pH of the sol diluted with the same mass of pure water: 3.9, Ca ion per 1 nm² of the surface of colloidal silica particles: 0.025). A part of the sol was sealed in a glass container, and the viscosity thereof was 37.3 mPa·s after being kept in a thermostat at 50°C for 1 month. Thus, the sol was stable.

### Comparative Example 1

Procedures were carried out in a similar manner as those in Examples 1 and 2 except that calcium hydroxide was not added. Consequently, a silica sol dispersed in methyl ethyl ketone (SiO₂ concentration: 20.5 mass%, viscosity: 1.5 mPa·s, water content: 0.1 mass %) was obtained.

### Comparative Example 2

Procedures were carried out in a similar manner as those in Examples 3 and 4 except that calcium hydroxide was not added. Consequently, a silica sol dispersed in methyl ethyl ketone (SiO₂ concentration: 20.5 mass%, viscosity: 1.7 mPa·s, water content: 0.1 mass %) was obtained.

### Comparative Example 3

Procedures were carried out in a similar manner as those in Example 5 except that calcium hydroxide was not added. Consequently, a silica sol dispersed in methanol (SiO₂ concentration: 20.5 mass%, viscosity: 1.3 mPa·s, water content: 1.3 mass %, pH of the sol diluted with the same mass of pure water: 3.2) was obtained.

### Comparative Example 4

Procedures were carried out in a similar manner as those in Example 6 by using the silica sol dispersed in methanol prepared in Comparative Example 3. Consequently, a silica sol dispersed in methyl ethyl ketone (SiO₂ concentration: 20.5 mass%, viscosity: 1.3 mPa•s, water content: 0.1 mass %) was obtained.

### Comparative Example 5

Procedures were carried out in a similar manner as those in Examples 5 and 6 except that 0.31 g of 10% solution of sodium hydroxide was added in place of calcium hydroxide. Consequently, a sodium-bonded silica sol dispersed in methyl ethyl ketone (SiO₂ concentration: 20.5 mass%, viscosity: 1.1 mPa·s, water content: 0.1 mass %, Na ion per 1 nm² of the surface of colloidal silica particles: 0.016). was obtained.

### Comparative Example 6

Procedures were carried out in a similar manner as those in Example 9 except that calcium methacrylate hydrate was not added. Consequently, a silica sol dispersed in methanol (SiO₂ concentration: 30.5 mass%, viscosity: 1.8 mPa·s, water content: 1.5 mass %) was obtained.

### Evaluation test of coloring on mixing with resin raw material

10 mL of acrylic monomer (Biscoat #150 (trade name) manufactured by Osaka Organic Chemical Industry Ltd.) and 2 mL of the above-mentioned silica sol dispersed in methanol were mixed in a 20 mL-glass bottle with lid, and the resulting mixture was kept in a thermostat at 50°C for 1 week. Change in color of the mixture is shown below. In the meantime, a blank in which 10 mL of acrylic monomer was placed in a 20 mL-glass bottle with lid was kept in a thermostat at 50°C for 1 week.

**Table 1**

| | Change in color | |
|---|---|---|
| | Before keeping at 50°C | After keeping at 50°C for 1 week |
| Example 1 | colorless | colorless |
| Example 3 | colorless | colorless |
| Example 5 | colorless | colorless |
| Example 7 | colorless | colorless |
| Example 8 | colorless | colorless |
| Example 9 | colorless | colorless |
| Example 10 | colorless | colorless |
| Comparative Example 3 | colorless | Yellow |
| Comparative Example 6 | colorless | Pale yellow |
| Blank | colorless | colorless |

As shown in Table 1, it was confirmed that silica sol particles on the surface of which an alkaline earth metal was bonded inhibited coloring on mixing with acrylic monomers compared with those that were not bonded thereby.

### Evaluation test of coloring of silica sol dispersed in methyl ethyl ketone

The above-mentioned silica sol dispersed in methyl ethyl ketone was placed in a 100 mL-glass bottle with lid, and kept in a thermostat at 50°C for 2-week and 4-week. Change in absorbance at UV range (λ = 350 nm) and in color of the silica sol are shown below.

**Table 2**

| | Change in absorbance | | | Change in color | | Particle diameter (nm) | Added Ca amount (/nm²) |
|---|---|---|---|---|---|---|---|
| | Before keeping at 50°C | After keeping at 50°C for 2-week | After keeping at 50°C for 4-week | Before keeping at 50°C | After keeping at 50°C for 4-week | | |
| Example 2 | 0.2 | 0.6 | 1.1 | colorless | Pale yellow | 7 | 0.008 |
| Comparative Example 1 | 0.2 | 2.4 | 4.3 | colorless | Dark yellow brown | 7 | None |
| Example 4 | 0.2 | 0.5 | 0.8 | colorless | Very pale yellow | 10 | 0.012 |
| Comparative Example 2 | 0.3 | 0.7 | 1.2 | colorless | Yellow | 10 | None |
| Example 6 | 0.1 | 0.3 | 0.4 | colorless | Transparent colloidal color | 12 | 0.008 |
| Comparative Example 4 | 0.3 | 0.4 | 0.7 | colorless | Very pale yellow | 12 | None |
| Comparative Example 5 | 0.1 | 0.7 | 1.3 | colorless | Yellow | 12 | 0.014 (Na) |

As shown in Table 2, it was confirmed that silica sols dispersed in methyl ethyl ketone containing silica sol particles on the surface of which Ca ion was bonded inhibited coloring of yellow with time compared with those containing silica sol particles that were not bonded thereby.

The silica sol dispersed in organic solvent according to the present invention has a low solid acidity of silica. Therefore, in case where it is used in a mixture with a resin and the like, it can inhibit change of properties or decomposition, etc. of the resin, compared with silica sols wherein no alkaline earth metal is bonded to the surface of the particles. Further, the silica sol can be used as hard coat films formed on the surface of resin molded forms such as lenses, bottles, films or plates, or micro-fillers for thin films, resin internal agents, and the like.

## Claims

1. An organosol of silica, wherein alkaline earth metal ions are bonded on surface of colloidal silica particles in a ratio of 0.001 to 0.2 per 1 nm² of the surface of the colloidal silica particles.

2. The organosol according to claim 1, wherein the alkaline earth metal ion is a calcium ion or magnesium ion.

3. A process for producing an organosol of silica, comprising the steps:
- adding an alkaline earth metal compound in an aqueous silica sol to obtain a surface-treated silica sol wherein alkaline earth metal ions are bonded on surface of colloidal silica particles, and wherein the alkaline earth metal compound is added in an amount of 0.001 to 0.2 alkaline earth metal ions per 1 nm² of the surface of the colloidal silica particle; and
- then substituting an organic solvent for water that is dispersion medium of the obtained surface-treated silica sol.

4. The process for producing an organosol of silica according to claim 3, wherein the aqueous silica sol is an acidic aqueous silica sol.

5. The process for producing an organosol of silica according to any one of claims 3 or 4, wherein the alkaline earth metal compound is an alkaline earth metal hydroxide.

6. The process for producing an organosol of silica according to any one of claims 3 to 5, wherein the alkaline earth metal compound is calcium hydroxide or magnesium hydroxide.

7. A process for producing the organosol of silica according to any one of claims 1 or 2, comprising adding an alkaline earth metal compound to an organosol of silica.

## Patentansprüche

1. Siliziumdioxid-Organosol, worin Erdalkalimetall-Ionen an die Oberfläche von kolloidalen Siliziumdioxidpartikeln in einem Verhältnis von 0,001 bis 0,2 pro 1 nm² der Oberfläche der kolloidalen Siliziumdioxidpartikel gebunden sind.

2. Organosol gemäß Anspruch 1, worin das Erdalkalimetall-Ion ein Calciumion oder Magnesiumion ist.

3. Verfahren zur Herstellung eines Siliziumdioxid-Organosols, das die folgenden Schritte umfasst:
- Hinzufügen einer Erdalkalimetallverbindung in ein wässriges Siliziumdioxid-Sol, um ein oberflächenbehandeltes Siliziumdioxid-Sol zu erhalten, worin Erdalkalimetall-Ionen an die Oberfläche der kolloidalen Siliziumdioxidpartikel gebunden sind, und worin die Erdalkalimetallverbindung in einer Menge von 0,001 bis 0,2 Erdalkalimetallionen pro 1 nm² der Oberfläche der kolloidalen Siliziumdioxidpartikel hinzugefügt wird; und
- Anschließendes Ersetzen des Wassers, das das Dispersionsmedium des erhaltenen oberflächenbehandelten Siliziumdioxid-Sols ist, durch ein organisches Lösungsmittel.

4. Verfahren zur Herstellung eines Siliziumdioxid-Organosols gemäß Anspruch 3, worin das wässrige Siliziumdioxid-Sol ein saures wässriges Siliziumdioxid-Sol ist.

5. Verfahren zur Herstellung eines Siliziumdioxid-Organosols gemäß einem der Ansprüche 3 oder 4, worin die Erdalkalimetallverbindung ein Erdalkalimetallhydroxid ist.

6. Verfahren zur Herstellung eines Siliziumdioxid-Organosols gemäß mindestens einem der Ansprüche 3 bis 5, worin die Erdalkalimetallverbindung Calciumhydroxid oder Magnesiumhydroxid ist.

7. Verfahren zur Herstellung eines Siliziumdioxid-Organosols gemäß einem der Ansprüche 1 oder 2, das das Hinzufügen einer Erdalkalimetallverbindung zu einem Siliciumdioxid-Organosol umfasst.

## Revendications

1. Organosol de silice, dans lequel des ions de métal alcalino-terreux sont liés à la surface de particules de silice colloïdale en un rapport de 0,001 à 0,2 par nm² de la surface des particules de silice colloïdale.

2. Organosol selon la revendication 1, dans lequel l'ion de métal alcalino-terreux est un ion calcium ou un ion magnésium.

3. Procédé de production d'un organosol de silice, comprenant les étapes selon lesquelles:
- on ajoute un composé de métal alcalino-terreux dans un sol de silice aqueux pour obtenir un sol de silice traité en surface dans lequel les ions de métal alcalino-terreux sont liés à la surface des particules de silice colloïdale, le composé de métal alcalino-terreux étant ajouté en une quantité de 0,001 à 0,2 ions de métal alcalino-terreux par nm² de surface des particules de silice colloïdale; et
- on remplace ensuite l'eau par un solvant organique qui est le milieu de dispersion du sol de silice traitée en surface obtenu.

4. Procédé de production d'un organosol de silice selon la revendication 3, dans lequel le sol de silice aqueux est un sol de silice aqueux acide.

5. Procédé de production d'un organosol de silice selon l'une quelconque des revendications 3 ou 4, dans lequel le composé de métal alcalino-terreux est un hydroxyde de métal alcalino-terreux.

6. Procédé de production d'un organosol de silice selon l'une quelconque des revendications 3 à 5, dans lequel le composé de métal alcalino-terreux est l'hydroxyde de calcium ou l'hydroxyde de magnésium.

7. Procédé de production de l'organosol de silice selon l'une quelconque des revendications 1 ou 2, comprenant l'addition d'un composé de métal alcalino-terreux à un organosol de silice.
